(19) Europäisches Patentamt
European Patent Office
Office européen des brevets

(11) EP 4 776 485 A1

(12) **EUROPEAN PATENT APPLICATION**
published in accordance with Art. 153(4) EPC

(43) Date of publication:
**15.07.2026 Bulletin 2026/29**

(21) Application number: **25812608.5**

(22) Date of filing: **22.07.2025**

(51) International Patent Classification (IPC):
***H02K 3/34*** *(2006.01)*

(52) Cooperative Patent Classification (CPC):
**H02K 3/522; H02K 2203/12**

(86) International application number:
**PCT/JP2025/026003**

(87) International publication number:
**WO 2026/069972 (02.04.2026 Gazette 2026/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.09.2024 JP 2024170014**

(71) Applicants:
• **Daikin Industries, Ltd.**
**Osaka-shi, Osaka 530-0001 (JP)**
• **Nature Architects Inc.**
**Tokyo 103-0011 (JP)**

(72) Inventors:
• **NAKA, Shojiro**
**Osaka-shi, Osaka 5300001 (JP)**

• **YAMAGIWA, Akio**
**Osaka-shi, Osaka 5300001 (JP)**
• **HIRANO, Masaki**
**Osaka-shi, Osaka 5300001 (JP)**
• **SHIMIZU, Hiromu**
**Chuo-ku, Tokyo 1030011 (JP)**
• **IWATSU, Kodai**
**Chuo-ku, Tokyo 1030011 (JP)**
• **OKA, Yohei**
**Chuo-ku, Tokyo 1030011 (JP)**
• **SUTO, Kai**
**Chuo-ku, Tokyo 1030011 (JP)**

(74) Representative: **Hoffmann Eitle**
**Patent- und Rechtsanwälte PartmbB**
**Arabellastraße 30**
**81925 München (DE)**

(54) **ROTARY ELECTRIC MACHINE FOR AIR CONDITIONER, COMPRESSOR, AND AIR CONDITIONER**

(57)    A stator (21) has a core (22), a coil (23), a first insulating portion (26), and a connecting portion (100). The coil (23) is a winding (23a) wound around each of teeth (25). The first insulating portion (26) is provided between the core (22) and the coil (23), and insulates the core (22) and the coil (23) from each other. The connecting portion (100) connects the first insulating portion (26) and the core (22). The connecting portion (100) is formed so that the coil (23) and the first insulating portion (26) can vibrate in the radial direction relative to the core (22).

FIG.3

EP 4 776 485 A1

**Description**

TECHNICAL FIELD

The present disclosure relates to a rotary electric machine for an air conditioner, a compressor, and an air conditioner.

BACKGROUND ART

Patent Document 1 discloses a technique of fixing a damping weight to the outer side of a stator at a plurality of different positions in the circumferential direction in order to reduce the vibration of a rotary electric machine in an annular vibration mode.

CITATION LIST

PATENT DOCUMENT

Patent Document 1: Japanese Unexamined Patent Publication No. 2016-119743

SUMMARY OF THE INVENTION

TECHNICAL PROBLEM

However, for the rotary electric machine of Patent Document 1, it is necessary to provide the damping weight on the outer side of the stator, and thus it is difficult to downsize the rotary electric machine.
An object of the present disclosure is to downsize a rotary electric machine with a mechanism in which vibration can be reduced, particularly a rotary electric machine for an air conditioner that is used for a compressor of the air conditioner.

SOLUTION TO THE PROBLEM

A first aspect of the present disclosure is directed to a rotary electric machine (20) for an air conditioner, comprising: a rotor (31) configured to rotate about a rotation axis (O); and a stator (21) disposed on an outer side of the rotor (31) in a radial direction. The stator (21) has a core (22), a coil (23), a first insulating portion (26), and a connecting portion (100). The core (22) includes a tubular back yoke (24) and a plurality of teeth (25) protruding inward in the radial direction from the back yoke (24). The coil (23) is a winding (23a) wound around each of the teeth (25). The first insulating portion (26) is provided between the core (22) and the coil (23) and insulates the core (22) and the coil (23) from each other. The connecting portion (100) connects the first insulating portion (26) and the core (22). The connecting portion (100) is formed so that the coil (23) and the first insulating portion (26) can vibrate in the radial direction relative to the core (22).
In the first aspect, the connecting portion (100) that connects the first insulating portion (26) and the core (22) is formed so that the coil (23) and the first insulating portion (26) can vibrate in the radial direction relative to the core (22). Thus, the coil (23) and the first insulating portion (26) serve as the dynamic vibration absorber that reduces vibration, and thus it is possible to achieve downsizing while it is unnecessary to provide a damping structure on the outer side of the stator (21).
A second aspect of the present disclosure is an embodiment of the first aspect. In the second aspect, the connecting portion (100) has a first elastic body (101) connecting the first insulating portion (26) and the core (22).
In the second aspect, the first elastic body (101) that connects the first insulating portion (26) and the core (22) enables the coil (23) and the first insulating portion (26) to vibrate in the radial direction relative to the core (22).
A third aspect of the present disclosure is an embodiment of the second aspect. In the third aspect, the first elastic body (101) has a raised portion (101a), and the core (22) has a recessed portion (22a) into which the raised portion (101a) is inserted.
In the third aspect, the raised portion (101a) of the first elastic body (101) is inserted into the recessed portion (22a) of the core (22), whereby the first elastic body (101) can be connected to the core (22).
A fourth aspect of the present disclosure is an embodiment of the second aspect. In the fourth aspect, the core (22) is comprised of laminated steel plates, and includes a swaging portion (27) fixing the steel plates to each other, and the first elastic body (101) is connected to the swaging portion (27).
In the fourth aspect, the swaging portion (27) configured to fix laminated steel plates that form the core (22) can be used to connect the first elastic body (101) to the core (22).

A fifth aspect of the present disclosure is an embodiment of any one of the second to fourth aspects. In the fifth aspect, a length of the first elastic body (101) in the radial direction is shorter than a length in a direction orthogonal to the radial direction.

In the fifth aspect, the first elastic body (101) enables the coil (23) and the first insulating portion (26) to more easily vibrate in the radial direction relative to the core (22).

A sixth aspect of the present disclosure is an embodiment of any one of the second to fifth aspects. In the sixth aspect, a material of the first elastic body (101) is the same as a material of the first insulating portion (26).

In the sixth aspect, the first elastic body (101) can be integrated with the first insulating portion (26).

A seventh aspect of the present disclosure is an embodiment of the sixth aspect. In the seventh aspect, the first elastic body (101) is integrated with the first insulating portion (26).

In the seventh aspect, the first insulating portion (26) and the core (22) can be connected easily.

An eighth aspect of the present disclosure is an embodiment of any one of the second to fifth aspects. In the eighth aspect, a material of the first elastic body (101) is different from a material of the first insulating portion (26).

In the eighth aspect, the stiffness of the first elastic body (101) can be enhanced.

A ninth aspect of the present disclosure is an embodiment of any one of the first to eighth aspects. In the ninth aspect, the first insulating portion (26) is disposed between the tooth (25) and the coil (23) in an axial direction and between the tooth (25) and the coil (23) in a circumferential direction.

In the ninth aspect, the tooth (25) and the coil (23) can be more easily insulated from each other in the circumferential direction than when the insulating paper separated from the first insulating portion (26) is disposed in a slot.

A tenth aspect of the present disclosure is an embodiment of any one of the first to ninth aspects. In the tenth aspect, the stator (21) includes a second insulating portion (28) disposed outside the back yoke (24) in the axial direction and fixed to the core (22), and the connecting portion (100) has a second elastic body (102) connecting the first insulating portion (26) and the second insulating portion (28).

In the tenth aspect, the second elastic body (102) that connects the first insulating portion (26) and the second insulating portion (28) enables the coil (23) and the first insulating portion (26) to vibrate in the radial direction relative to the core (22).

An eleventh aspect of the present disclosure is directed to a compressor including the rotary electric machine (20) for the air conditioner according to any one of the first to tenth aspects.

In the eleventh aspect, the rotary electric machine (20) for the air conditioner which generates less vibration as well as being downsized is provided. Thus, the compressor can be downsized and also the noise due to vibration can be reduced.

A twelfth aspect of the present disclosure is directed to an air conditioner including the rotary electric machine (20) for the air conditioner according to any one of the first to tenth aspects.

In the twelfth aspect, the rotary electric machine (20) for the air conditioner which generates less vibration as well as being downsized is provided. Thus, the air conditioner can be downsized and also the noise due to vibration can be reduced.

BRIEF DESCRIPTION OF THE DRAWINGS

[FIG. 1] FIG. 1 is a schematic view of a lateral sectional configuration of a rotary electric machine for an air conditioner according to a first embodiment.

[FIG. 2] FIG. 2 is a perspective view of a stator in the rotary electric machine for the air conditioner according to the first embodiment.

[FIG. 3] FIG. 3 is a schematic view of a longitudinal sectional configuration of a structure in which a first insulating portion and a core are connected in the rotary electric machine for the air conditioner according to the first embodiment.

[FIG. 4] FIG. 4 is a schematic view showing that the coil and the first insulating portion vibrate in the radial direction relative to the core in the structure shown in FIG. 3.

[FIG. 5A] FIG. 5A is a perspective view of a connecting portion according to the first embodiment.

[FIG. 5B] FIG. 5B is an enlarged perspective view of the connecting portion shown in FIG. 5A.

[FIG. 6] FIG. 6 is a graph showing the relationship between the frequency and the vibration in the rotary electric machine for the air conditioner according to the first embodiment.

[FIG. 7] FIG. 7 is a longitudinal sectional view of a variation of the connecting portion of the first embodiment.

[FIG. 8A] FIG. 8A is a longitudinal sectional view of a variation of the connecting portion of the first embodiment.

[FIG. 8B] FIG. 8B is a longitudinal sectional view of a variation of the connecting portion of the first embodiment.

[FIG. 8C] FIG. 8C is a longitudinal sectional view of a variation of the connecting portion of the first embodiment.

[FIG. 8D] FIG. 8D is a longitudinal sectional view of a variation of the connecting portion of the first embodiment.

[FIG. 8E] FIG. 8E is a longitudinal sectional view of a variation of the connecting portion of the first embodiment.

[FIG. 8F] FIG. 8F is a longitudinal sectional view of a variation of the connecting portion of the first embodiment.

[FIG. 9A] FIG. 9A is a longitudinal sectional view of a variation of the connecting portion of the first embodiment.

[FIG. 9B] FIG. 9B is a longitudinal sectional view of a variation of the connecting portion of the first embodiment.

[FIG. 9C] FIG. 9C is a longitudinal sectional view of a variation of the connecting portion of the first embodiment.

[FIG. 9D] FIG. 9D is a perspective view of an example of the core to which the connecting portion of the first embodiment is connected.

[FIG. 9E] FIG. 9E is a perspective view of another example of the core to which the connecting portion of the first embodiment is connected.

[FIG. 10A] FIG. 10A is a longitudinal sectional view of a variation of the connecting portion of the first embodiment.

[FIG. 10B] FIG. 10B is a longitudinal sectional view of a variation of the connecting portion of the first embodiment.

[FIG. 10C] FIG. 10C is a plan view of a variation of the connecting portion of the first embodiment as viewed in the axial direction.

[FIG. 10D] FIG. 10D is a longitudinal sectional view of a variation of the connecting portion of the first embodiment.

[FIG. 10E] FIG. 10E is a longitudinal sectional view of a variation of the connecting portion of the first embodiment.

[FIG. 10F] FIG. 10F is a longitudinal sectional view of a variation of the connecting portion of the first embodiment.

[FIG. 11A] FIG. 11A is a longitudinal sectional view of an example of the first insulating portion of the first embodiment.

[FIG. 11B] FIG. 11B is a longitudinal sectional view of another example of the first insulating portion of the first embodiment.

[FIG. 11C] FIG. 11C is a longitudinal sectional view of a variation of the connecting portion that connects the first insulating portion shown in FIG. 11B and the core.

[FIG. 11D] FIG. 11D is a lateral sectional view of the variation of the connecting portion that connects the first insulating portion shown in FIG. 11B and the core.

[FIG. 12] FIG. 12 is a longitudinal sectional view of an example of the configuration of a compressor of a second embodiment.

[FIG. 13] FIG. 13 is a piping system diagram of an example of the configuration of an air conditioner of a third embodiment.

## DESCRIPTION OF EMBODIMENTS

Hereinafter, embodiments of the present disclosure will be described with reference to the drawings. The embodiments below are merely exemplary ones in nature, and are not intended to limit the scope, applications, or use of the invention. In the drawings, the same reference numerals denote the same components, but the dimensions in the drawings, such as a length, a width, a thickness, and a depth, are changed as necessary from the actual scales for the sake of clarity and simplicity of the drawings, and may not correspond to the actual relative dimensions.

(First Embodiment)

<Motor>

A motor (20) of the first embodiment is an example of a rotary electric machine (20) for an air conditioner.

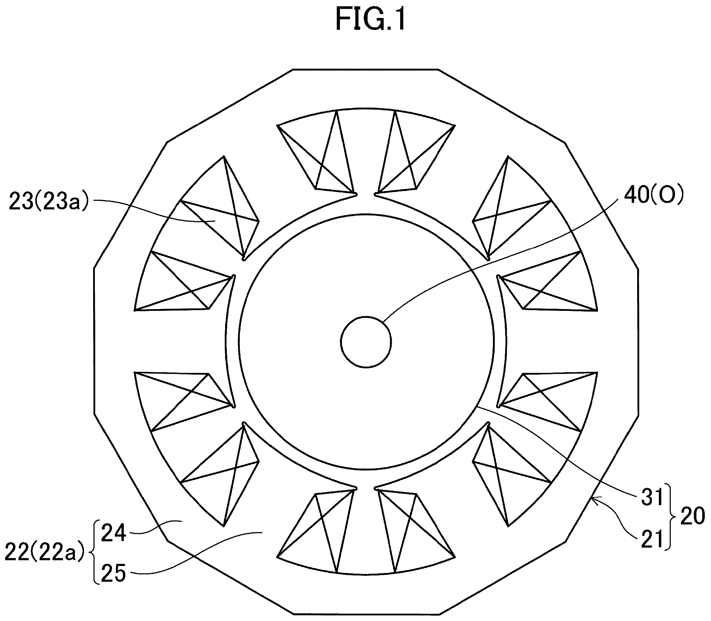

As shown in FIG. 1, the motor (20) includes a stator (21) and a rotor (31). The motor (20) is an inner rotor motor. The stator (21) has a core (22) and a plurality of coils (23). The core (22) is disposed on the outer side of the stator (21) in the radial direction. The rotor (31) is rotatable together with a drive shaft (40). The rotor (31) rotates about the axis of the drive shaft (40) (hereinafter referred to as the rotation axis (O)).

In the present disclosure, the direction in which the rotation axis (O) extends is referred to as the "axial direction," the direction orthogonal to the "axial direction" is referred to as the "radial direction," and the direction around the rotation axis (O) is referred to as the "circumferential direction." Further, the cross section taken along the "axial direction" is referred to as the "longitudinal cross section," and the cross section orthogonal to the "axial direction" is referred to as the "lateral cross section."

The core (22) includes a soft magnetic material, and in this example, a plurality of electromagnetic steel plates (22a) are stacked in the axial direction in order to form the core (22). The core (22) may be a powder magnetic core. The core (22) has a tubular back yoke (24) and a plurality of teeth (25). The teeth (25) protrude radially inward from the inner peripheral surface of the back yoke (24). The coil (23) is a winding (23a) that is wound around each of the teeth (25).

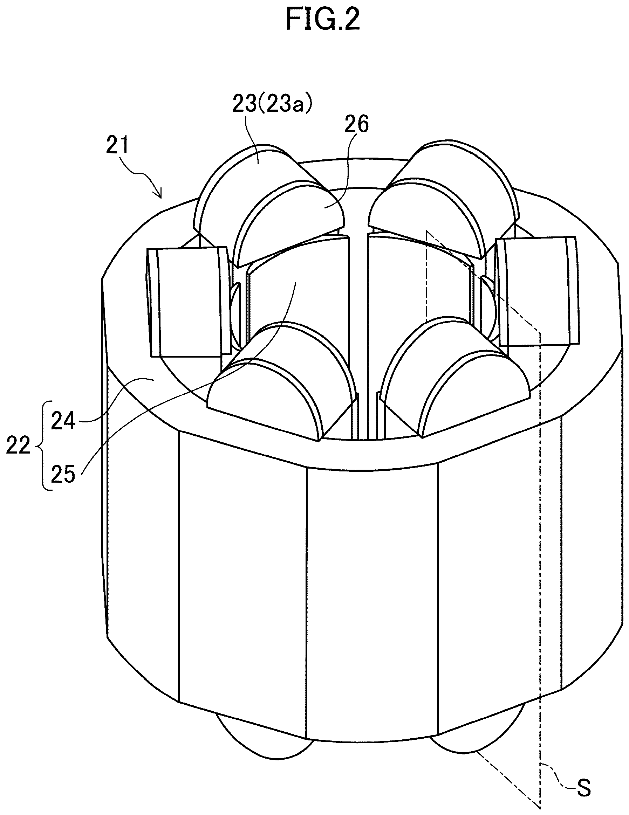

The configuration of the motor (20) shown in FIGS. 1 and 2 is an example, and the number of poles of the motor (20), the shape of the core (22), the number of teeth (25), and the like are not particularly limited.

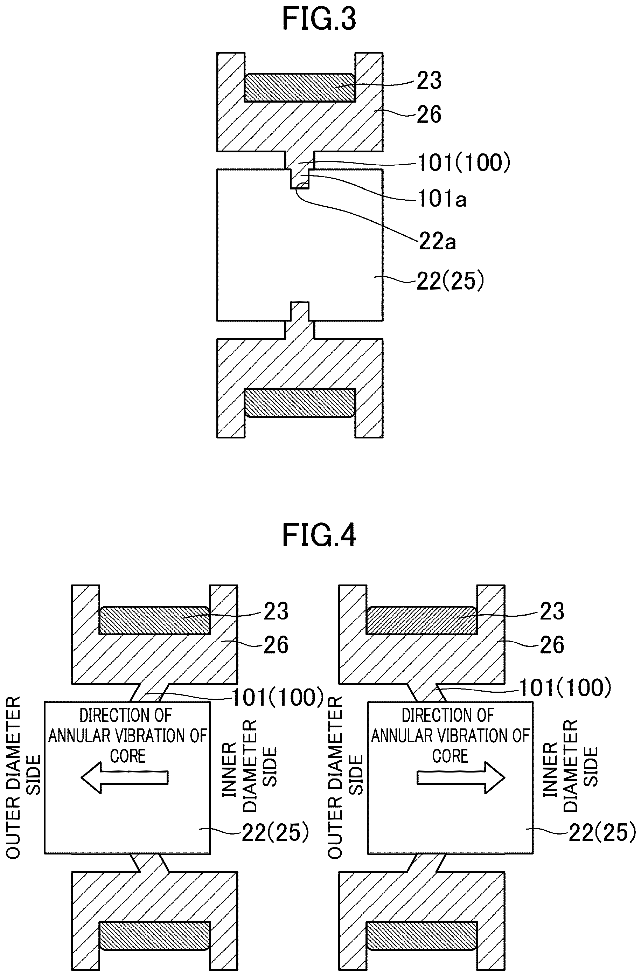

As shown in FIGS. 2 and 3, the stator (21) has a first insulating portion (26) between the tooth (25) (the core (22)) and the coil (23) in the axial direction. The first insulating portion (26) insulates the core (22) and the coil (23) from each other. Insulating paper may be used to insulate the tooth (25) and the coil (23) in the circumferential direction from each other. FIG. 3 is a schematic view of the sectional configurations of the coil (23) provided on one tooth (25) and the core (22), which are taken along the plane (S) indicated by the dash-dotted line in FIG. 2.

In this example, the first insulating portion (26) is disposed on each of the upper surface and the lower surface of the tooth (25) in the axial direction. In other words, the first insulating portion (26) is disposed between the tooth (25) and the coil (23) in the axial direction, and the winding (23a) is wound around the tooth (25) with the first insulating portion (26) sandwiched therebetween. Both ends of the first insulating portion (26) in the radial direction may be provided with a raised portion to prevent the coil (23) from dropping off.

<Connecting Portion>

As shown in FIG. 3, the stator (21) has a first elastic body (101) that connects the first insulating portion (26) and the core (22). The first elastic body (101) is an example of a connecting portion (100). The connecting portion (100) is formed so that the coil (23) and the first insulating portion (26) can vibrate in the radial direction relative to the core (22).

In this example, the first insulating portion (26) disposed on the upper side of the tooth (25) in the axial direction is provided with the first elastic body (101) protruding downward in the axial direction, and a raised portion (101a) disposed on the lower end of the first elastic body (101) in the axial direction is inserted into a recessed portion (22a) disposed on the upper end of the tooth (25) in the axial direction. Further, the first insulating portion (26) disposed on the lower side of the tooth (25) in the axial direction is provided with the first elastic body (101) protruding upward in the axial direction, and a raised portion (101a) disposed on the upper end of the first elastic body (101) in the axial direction is inserted into a recessed portion (22a) disposed on the lower end of the tooth (25) in the axial direction. The first elastic body (101) may be integrated with the first insulating portion (26). In other words, the material of the first elastic body (101) may be the same as the material of the first insulating portion (26). In this case, the first insulating portion (26) may be made of, for example, polybutylene terephthalate (PBT), liquid crystal polymer (LCP), polyphenylene sulfide (PPS), or the like.

In order to allow the coil (23) and the first insulating portion (26) to easily vibrate in the radial direction relative to the core (22), the first elastic body (101) preferably has a length in the radial direction that is shorter than the length in the direction orthogonal to the radial direction and the axial direction, and more preferably has a length in the radial direction that is shorter than or equal to about half of the length in the direction orthogonal to the radial direction and the axial direction. Alternatively, the first elastic body (101) may be disposed so that the direction in which the first elastic body (101) on which a unit load is exerted is more deformed is the radial direction.

When the first insulating portion (26) and the core (22) (the tooth (25)) are connected by the first elastic body (101), in other words, by the connecting portion (100), a dynamic vibration absorber functions where the first insulating portion (26) and the coil (23) serve as a mass body, the connecting portion (100) serves as a spring element, and the core (22) serves as a damping target. Accordingly, the vibration of the motor (20) in the radial direction is reduced.

FIG. 4 is a schematic view of an exemplary state in which annular vibration is occurring on the core (22) in a pair of teeth (25) that sandwich the rotation axis (O) in the radial direction and face each other. As shown in FIG. 4, by the first elastic body (101) being provided, the direction in which the first insulating portion (26) and the coil (23) vibrate in the radial direction relative to one of the teeth (25) is opposite to the direction in which the first insulating portion (26) and the coil (23) vibrate in the radial direction relative to the other one of the teeth (25). Accordingly, the annular vibration of the core (22) can be reduced.

In this example, the coil (23) and the first insulating portion (26) are independently disposed on each of the teeth (25), and the first insulating portion (26) and the core (22) are separated by the first elastic body (101). Thus, even if the winding (23a) is wound around the tooth (25) with strong tension, the tooth (25), the first insulating portion (26), and the coil (23) can avoid being integrated, and thus the coil (23) and the first insulating portion (26) can vibrate in the radial direction relative to the core (22).

<Exemplary Design of Connecting Portion>

For the dynamic vibration absorber, regarding the one-dimensional spring-mass system problem, a theoretically optimum solution to the stiffness can be calculated, and based on this calculation method, the stiffness given to the connecting portion (100) can be determined.

First, the displacement amount $\delta$ when the unit load F (= 1 N) is exerted on the stator (21) is determined by a numerical calculation. If the displacement amount $\delta$ is, for example, $1.92 \times 10^{-9}$ m, the macro stiffness k of the stator (21) can be expressed by the following equation.

$$k = F/\delta = 1/(1.92 \times 10^{-9}) \approx 5.21 \times 10^9 \ [\text{N/m}]$$

While the spring response is not linear across the entire load range, the above equation employs the Hooke's law for convenience.

Next, the effective mass m of the stator (21) is calculated from the natural vibration frequency. If the natural vibration frequency fn that excites the annular vibration (the elliptic vibration) on the stater (21) is 2872 Hz according to the frequency response analysis, the effective mass m is calculated as follows from the relational equation $fn = (1/2\pi) \times \sqrt{(k/m)}$:

$$m = k/(4\pi^2 fn^2) = (5.21 \times 10^9)/(4 \times \pi^2 \times 2872^2) \approx 1.60 \ [\text{kg}].$$

In this embodiment, the coil (23) is used as the point mass of the dynamic vibration absorber, and thus the additional mass ma is the sum of the mass of the first insulating portion (26) and the mass of the coil (23). Here, if the additional mass ma is 0.134 kg, the optimum natural vibration frequency $\omega a$ of the dynamic vibration absorber alone is given by the following equation using the ratio $\mu$ of the effective mass m of the main system and the additional mass ma.

$$\omega a = (1/(1 + \mu)) \times \omega n = (1/(1 + ma/m)) \times 2\pi fn = (1/(1 + 0.134/1.60)) \times 2\pi \times 2872 \approx 16647 \ [\text{rad./s}]$$

In the above equation, $\omega n$ is a stator vibration frequency, and $\omega n = 2\pi fn$.

Accordingly, the optimum spring constant ka given to the connecting portion (100) is calculated as follows:

$$ka = ma \times \omega a^2 = 0.134 \times 16647^2 \approx 3.71 \times 10^7 \ [\text{N/m}].$$

Thus, in this example, parameters of the connecting portion (100), such as a material, a shape, and an arrangement position, and the like, may be determined so that the stiffness ka of the connecting portion (100) in the radial direction is $3.71 \times 10^7$ [N/m]. Specifically, the displacement amount $\delta'$ when the load F' is exerted on the first insulating portion (26) provided with the first elastic body (101) as the connecting portion (100) is determined by a numerical calculation, and then the parameters of the first elastic body (101) are adjusted so as to approach the optimum stiffness ka = $F'/\delta'$ = $3.71 \times 10^7$ [N/m].

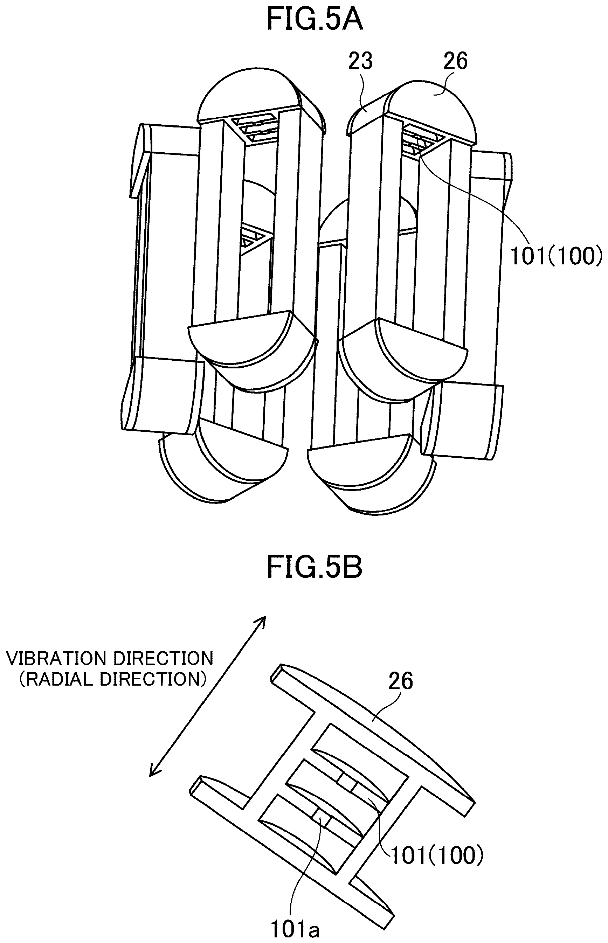

FIGS. 5A and 5B show an example of the first elastic body (101) as designed above. In the example shown in FIGS. 5A and 5B, the first insulating portion (26) is provided with two first elastic bodies (101) that are to be connected with the core (22) (the tooth (25)). Each of the first elastic bodies (101) extends in the direction orthogonal to the vibration direction (the radial direction). That is, the length of each of the first elastic bodies (101) in the radial direction is shorter than the length in the direction orthogonal to the radial direction. The raised portion (101a) to be inserted into the recessed portion (22a) (see FIG. 3) of the core (22) is provided at the center of each of the first elastic bodies (101) in the direction orthogonal to the radial direction.

<Features of First Embodiment>

In the motor (20) of the first embodiment described above, the connecting portion (100) that connects the first insulating portion (26) and the core (22), or specifically the first elastic body (101) that connects the first insulating portion (26) and the tooth (25), is formed so that the coil (23) and the first insulating portion (26) can vibrate in the radial direction relative to the core (22). Thus, the coil (23) and the first insulating portion (26) serve as the dynamic vibration absorber that reduces vibration, and thus it is possible to downsize the motor (20) while it is unnecessary to provide a damping structure on the outer side of the stator (21).

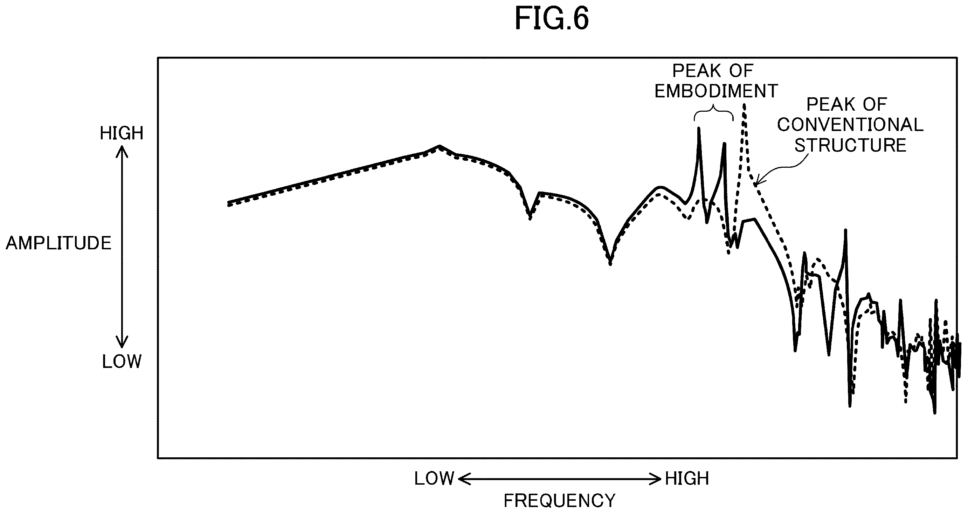

FIG. 6 shows the relationship between the frequency (the number of rotations of the rotor) and the vibration in the motor (20) of the first embodiment in comparison with a motor with a conventional structure in which the connecting portion (100) is not provided. As shown in FIG. 6, the vibration (the peak of amplitude) of the motor (20) of the first embodiment is lowered in comparison with the motor with the conventional structure.

In the motor (20) of the first embodiment, the connecting portion (100) has the first elastic body (101) that connects the first insulating portion (26) and the core (22), and thus, by the first elastic body (101), the coil (23) and the first insulating portion (26) can be vibrated in the radial direction relative to the core (22). Further, since the first elastic body (101) has the raised portion (101a) and the core (22) has the recessed portion (22a) into which the raised portion (101a) is inserted, the first elastic body (101) can be connected to the core (22) by the raised portion (101a) of the first elastic body (101) being inserted into the recessed portion (22a) of the core (22).

In the motor (20) of the first embodiment, the length of the first elastic body (101) in the radial direction is shorter than the length in the direction orthogonal to the radial direction, and thus the first elastic body (101) enables the coil (23) and the first insulating portion (26) to easily vibrate in the radial direction relative to the core (22).

In the motor (20) of the first embodiment, the material of the first elastic body (101) is the same as the material of the first insulating portion (26), and thus the first elastic body (101) can be integrated with the first insulating portion (26). Accordingly, the first insulating portion (26) and the core (22) can be connected easily.

(Variations of First Embodiment)

In the first embodiment, the first elastic body (101) shown in FIG. 3 has been described as an example of the connecting portion (100), but a material, a shape, and an arrangement position, and the like of the connecting portion (100) are not particularly limited as long as the coil (23) and the first insulating portion (26) can vibrate in the radial direction relative to the core (22).

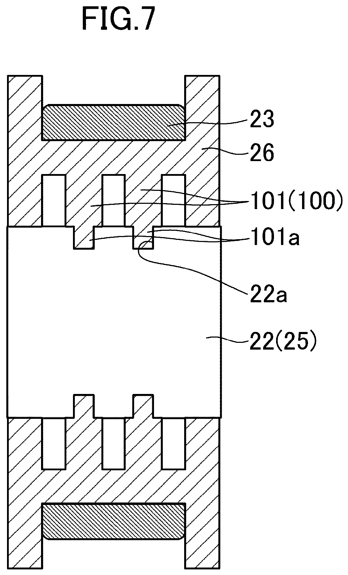

For example, as shown in FIG. 7, a plurality of first elastic bodies (101) (two elastic bodies in this example) may be formed side by side in the radial direction. Further, the first insulating portion (26) may be in partial contact with the core (22). For example, both ends of the first insulating portion (26) in the radial direction may be in contact with the tooth (25). In FIG. 7, the same components as in FIG. 3 are labeled with the same reference numerals.

In the first embodiment, the material of the first elastic body (101) is the same as the material of the first insulating portion (26), but the material of the first elastic body (101) may be different from the material of the first insulating portion (26). Accordingly, the stiffness of the first elastic body (101) can be enhanced. In this case, as the first elastic body (101), for example, a plate spring made of metal with a higher Young's modulus than resin may be used. Alternatively, not limited to this, the first insulating portion (26) may employ resin (PBT, LCP, PPS, or the like), and the first elastic body (101) may employ resin, rubber, or metal different from that of the first insulating portion (26). In this case, in the first elastic body (101), the material of the raised portion (101a) and the material of another portion may be different.

In order to enhance the stiffness of the first elastic body (101) made of the same material as that of the first insulating portion (26), the number of first elastic bodies (101) or the width of the first elastic body (101) in the radial direction may be increased so that the sectional area of the first elastic body (101) in the deformation direction can be increased.

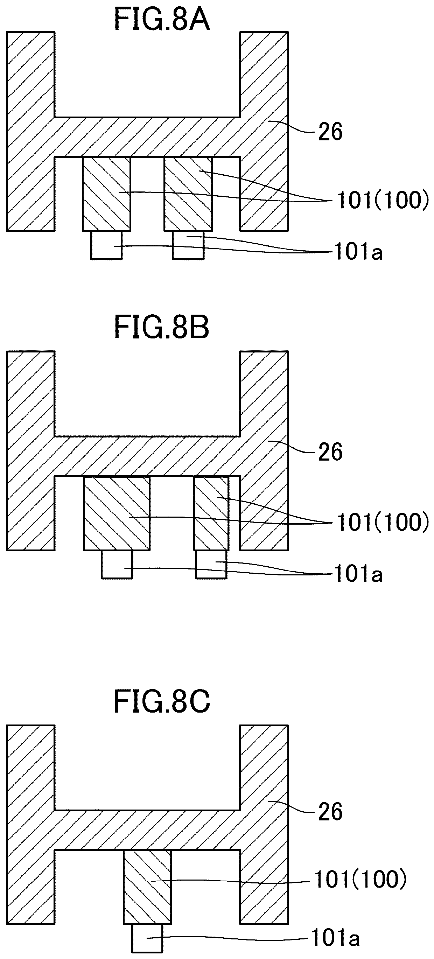

FIG. 8A shows the first elastic body (101) of FIG. 7 that is made of a different material from that of the first insulating portion (26), and FIGS. 8B to 8F show variations of the first elastic body (101) of FIG. 8A. In FIGS. 8A to 8F, the same components as in FIG. 7 are labeled with the same reference numerals. In the first elastic bodies (101) shown in FIGS. 8A to 8F, the material of the raised portion (101a) and the materials of the other portions are different.

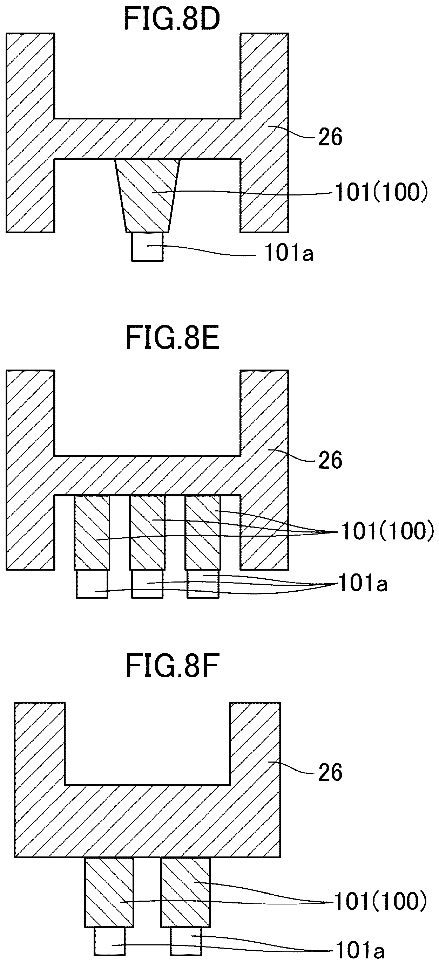

Specifically, FIG. 8B shows that two first elastic bodies (101), each of which has a different width in the radial direction, are provided. FIGS. 8C and 8D show that only one first elastic body (101) is provided. The first elastic body (101) shown in FIG. 8D has a tapered shape of which the width in the radial direction decreases toward the tooth (25). Accordingly, the moldability of the first elastic body (101) is improved. FIG. 8E shows that three first elastic bodies (101) are provided. FIG. 8F shows that the surface of the first insulating portion (26) on which the first elastic bodies (101) are placed is flat.

Even if the material of the first elastic body (101) is the same as the material of the first insulating portion (26), the shape of the first elastic body (101), the number of first elastic bodies (101), and the like, may be configured as shown in FIGS. 8B to 8F.

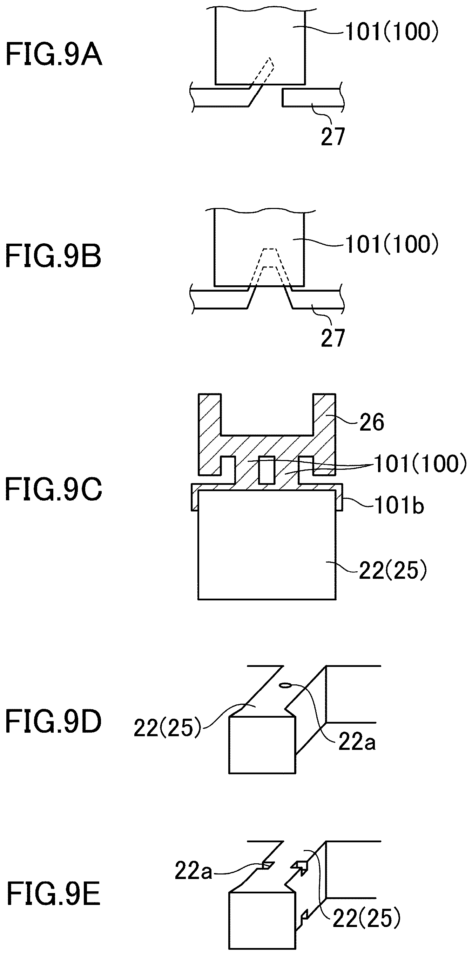

In the first embodiment, the raised portion (101a) of the first elastic body (101) is inserted into the recessed portion (22a) of the core (22), whereby the first elastic body (101) is connected to the core (22). However, instead, as shown in FIG. 9A or 9B, a swaging portion (27) configured to fix laminated steel plates that form the core (22) may be used to connect the first elastic body (101) to the core (22). Specifically, FIG. 9A shows that a one-sided swage is used as the swaging portion (27), and FIG. 9B shows that a V-swage is used as the swaging portion (27). In order to enhance the stiffness of the first elastic body (101) when the first elastic body (101) is connected to the core (22) by using the swaging portion (27), the width of an interlocked portion between the swaging portion (27) and the first elastic body (101) in the radial direction and/or the width of the interlocked portion between the swaging portion (27) and the first elastic body (101) in the direction orthogonal to the radial direction only have to be increased.

Alternatively, as shown in FIG. 9C, the end portion of the first elastic body (101) may be provided with a holding portion (101b) that caps the tooth (25) in the radial direction in order to connect the first elastic body (101) to the core (22).

In the first embodiment, as shown in FIGS. 3 and 9D, the raised portion (101a) of the first elastic body (101) is inserted into the recessed portion (22a), a hollow (a dent) that is provided in the end surface of the tooth (25) in the axial direction. However, instead, as shown in FIG. 9E, the end portion of the tooth (25) in the circumferential direction may be cut out so that the recessed portion (22a) is formed. In this case, the raised portion (101a) to be inserted into the recessed portion (22a) is provided on the first elastic body (101).

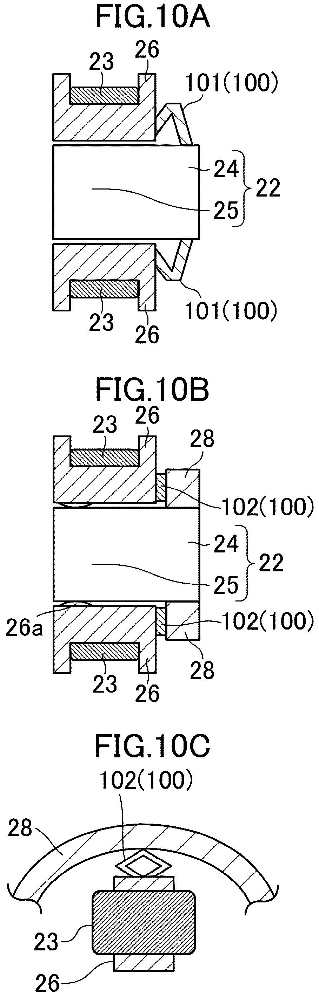

In the first embodiment, as shown in FIG. 3, the end surface of the first insulating portion (26) in the axial direction and the end surface of the tooth (25) in the axial direction are connected by the first elastic body (101). However, instead, as shown in FIG. 10A, the end surface of the first insulating portion (26) in the radial direction (the outer diameter side) and the end surface of the back yoke (24) in the axial direction may be connected by the first elastic body (101). In this case, the first elastic body (101) may have a bent spring structure. In FIG. 10A, the same components as in FIG. 3 are labeled with the same reference numerals.

Alternatively, as shown in FIGS. 10B and 10C, a second insulating portion (28) fixed to the core (22) may be disposed outside the back yoke (24) of the stator (21) in the axial direction, and a second elastic body (102) connecting the first insulating portion (26) and the second insulating portion (28) may be provided as the connecting portion (100). Accordingly, the first insulating portion (26) and the core (22) are connected by the second elastic body (102) and the second insulating portion (28). The second elastic body (102) is formed so that the coil (23) and the first insulating portion (26) can vibrate in the radial direction relative to the core (22). In FIGS. 10B and 10C, the same components as in FIG. 3 are labeled with the same reference numerals.

The second elastic body (102) may have a bent spring structure. FIG. 10C shows an example of the second elastic body (102) of which the spring structure has a rhombus shape when viewed in the axial direction, but not limited to this, the spring structure may have a circular ring shape, a jagged wave shape, or the like. Similarly to the first elastic body (101), the material of the second elastic body (102) may be resin, rubber, metal, or the like. In order to enhance the stiffness of the second elastic body (102), a material with a higher Young's modulus may be used, or the dimension of the second elastic body (102) may be increased.

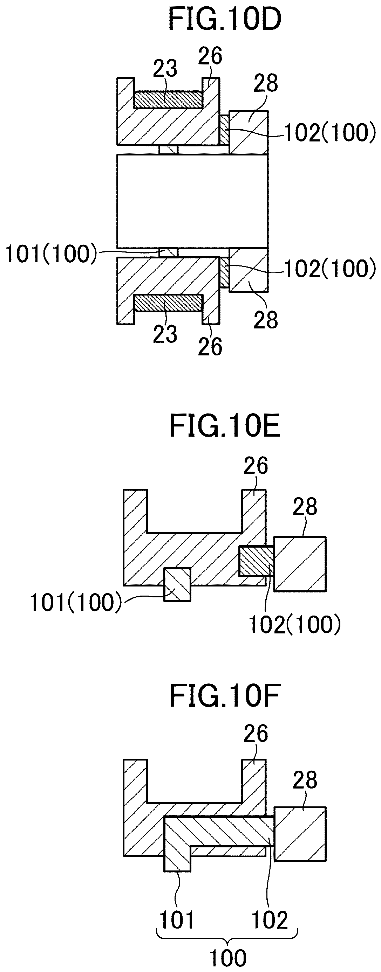

When the second elastic body (102) is provided, the first elastic body (101) is not necessarily provided. In this case, as shown in FIG. 10B, the end surface of the first insulating portion (26) in the axial direction may be provided with a contact portion (26a) that is in point contact with the end surface of the tooth (25) in the axial direction. Alternatively, as shown in FIG. 10D, both the first elastic body (101) and the second elastic body (102) may be provided. Accordingly, the vibration can be more effectively reduced. In FIG. 10D, the same components as in FIG. 3 are labeled with the same reference numerals, and the structure of the first elastic body (101) is simplified.

When both the first elastic body (101) and the second elastic body (102) are provided while the material of the first elastic body (101) and the second elastic body (102) is different from the material of the first insulating portion (26), particularly while the material of the first elastic body (101) and the second elastic body (102) is metal, the first elastic body (101) and the second elastic body (102) may be formed by insert molding of metal. In this case, as shown in FIG. 10E, the first elastic body (101) and the second elastic body (102) may be formed separately by insert molding, or as shown in FIG. 10F, the first elastic body (101) and the second elastic body (102) may be formed integrally by insert molding.

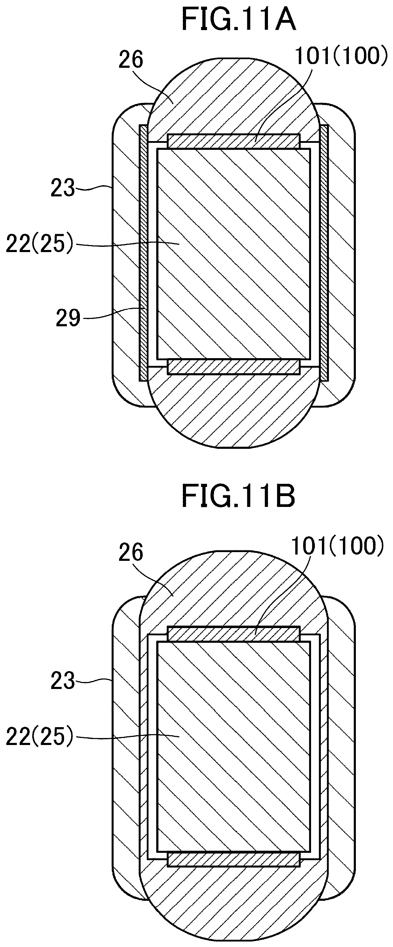

FIGS. 11A and 11B are schematic views of the configuration of a cross section orthogonal to the cross section shown in FIG. 3. In FIGS. 11A and 11B, the same components as in FIG. 3 are labeled with the same reference numerals, and the structure of the first elastic body (101) is simplified.

As shown in FIG. 11A, the tooth (25) and the coil (23) may be insulated from each other in the circumferential direction by the insulating paper (29). The insulating paper (29) may be disposed so as to overlap with the circumferential end portions of the first insulating portions (26) disposed above and below the tooth (25) in the axial direction.

Alternatively, as shown in FIG. 11B, the first insulating portion (26) may be provided between the tooth (25) and the coil (23) in the circumferential direction in addition to between the tooth (25) and the coil (23) in the axial direction. That is, the first insulating portion (26) shown in FIG. 11B is the one that is integrated with the insulating paper (29) shown in FIG. 11A. In this case, the first elastic body (101) as the connecting portion (100) may also be integrated with the first insulating portion (26).

The insulating paper (29) shown in FIG. 11A or the first insulating portion (26) shown in FIG. 11B can prevent the coil (23) from coming into contact with the side surface of the tooth (25) in the circumferential direction. Here, the coil (23) can more easily move in the radial direction relative to the core (22) when a gap is provided between the insulating paper (29) shown in FIG. 11A or the first insulating portion (26) shown in FIG. 11B and the side surface of the tooth (25) in the circumferential direction. Thus, the width of each of the first insulating portions (26) disposed above and below the tooth (25) in the axial direction may be greater than the width of the tooth (25) in the direction orthogonal to the radial direction.

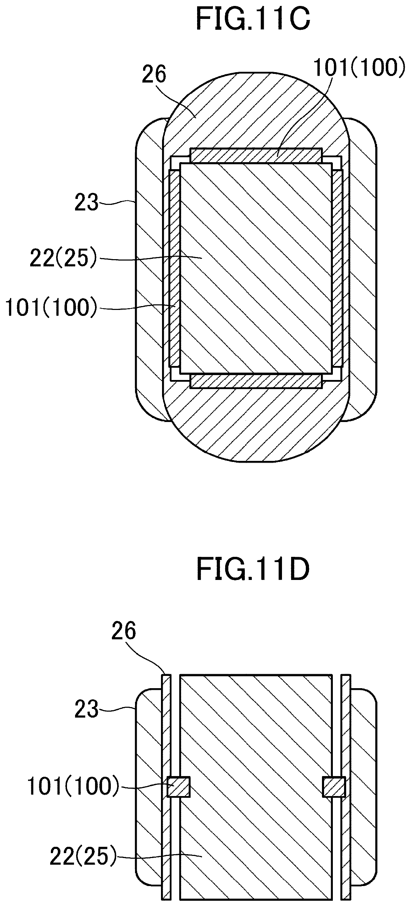

As a variation of the case shown in FIG. 11B, as shown in FIGS. 11C and 11D, the first elastic body (101) that connects the first insulating portion (26) and the side surface of the tooth (25) in the circumferential direction may be added. In other words, the first elastic body (101) may also be provided in a slot in which the coil (23) is disposed. In FIGS. 11C and 11D, the same components as in FIG. 11B are labeled with the same reference numerals. FIG. 11D shows the configuration of the cross section orthogonal to the cross section shown in FIG. 11C.

The first insulating portion (26) shown in FIGS. 11C and 11D may be divided into two pieces at near the center in the axial direction so that the divided pieces can cover the tooth (25) from above and below the tooth (25) in the axial direction and the divided pieces can integrate with each other. Accordingly, the first elastic body (101) that connects the first insulating portion (26) and the side surface of the tooth (25) in the circumferential direction can be formed more easily. In this case, as shown in FIG. 11D, the side surface of the tooth (25) in the circumferential direction may be provided with a notch into which the first elastic body (101) is fitted.

(Second Embodiment)

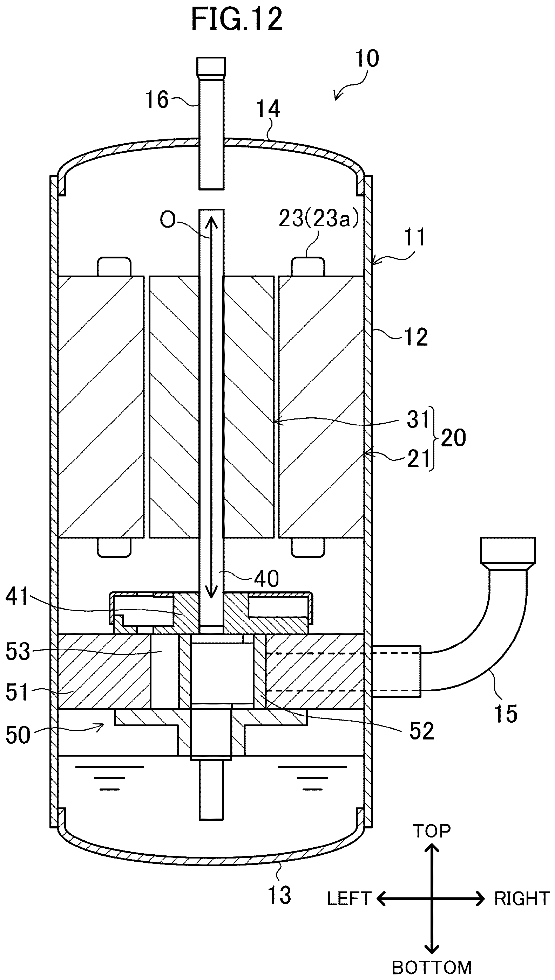

As shown in FIG. 12, the compressor (10) of the second embodiment is a rotary compressor. The compressor (10) has a casing (11), the motor (20) of the first embodiment, a drive shaft (40), and a compression mechanism (50). In the following description, the terms "top", "bottom", "right", and "left" represent the directions defined when the compressor (10) is viewed from the front (see the arrows in FIG. 12). The direction of "top" and "bottom" is the axial direction of the drive shaft (40). The direction of "right" and "left" is the direction orthogonal to the axial direction, and also is the radial direction of the motor (20) (or the casing (11)).

The casing (11) is a hermetic container. The inside of the casing (11) is filled with a high-pressure refrigerant discharged from the compression mechanism (50). The casing (11) is made of a metal material. The casing (11) has a barrel (12), a bottom portion (13), and a top portion (14). The barrel (12) is a tubular member extending in the top-bottom direction. The axial direction of the barrel (12) in a tubular shape is the vertical direction. The bottom portion (13) closes the lower end of the barrel (12), and the top portion (14) closes the upper end of the barrel (12). The casing (11) houses the motor (20), the drive shaft (40), and the compression mechanism (50) in the order from the top.

The number of rotations of the motor (20) is controlled by an inverter device. In other words, the compressor (10) is an inverter compressor of which the number of rotations is variable. The stator (21) of the motor (20) is fixed to the inner peripheral surface of the barrel (12). The rotor (31) of the motor (20) rotates about the rotation axis (O) as described in the first embodiment. The drive shaft (40) extends downward from the motor (20). The drive shaft (40) is driven and rotated by the motor (20). The drive shaft (40) is rotatably supported by a bearing (41) provided below the motor (20).

The compression mechanism (50) has a cylinder (51) and a piston (52) provided in the cylinder (51). A cylinder chamber (53) is formed between the inner peripheral surface of the cylinder (51) and the outer peripheral surface of the piston (52). The piston (52) driven by the drive shaft (40) compresses fluid in the cylinder chamber (53).

The compressor (10) has a suction pipe (15) and a discharge pipe (16). The suction pipe (15) penetrates the barrel (12) in the radial direction, and communicates with the cylinder chamber (53). A low-pressure refrigerant is sucked into the cylinder chamber (53) through the suction pipe (15). The discharge pipe (16) penetrates the top portion (14) in the axial direction, and communicates with the internal space of the casing (11). The refrigerant compressed by the compression mechanism (50) flows through a core cut (not shown) of the motor (20), and is then discharged through the discharge pipe (16).

In the compressor (10) of the second embodiment, as described in the first embodiment, the motor (20) with the mechanism in which vibration can be reduced can be downsized. Thus, the compressor (10) can be downsized and also the noise due to vibration can be reduced.

The configuration of the compressor (10) shown in FIG. 12 is an example, and the compressor (10) is not limited to a rotary compressor. The compressor (10) can be any type of compressor such as a swing compressor, a scroll compressor, a screw compressor, or a turbo compressor.

(Third Embodiment)

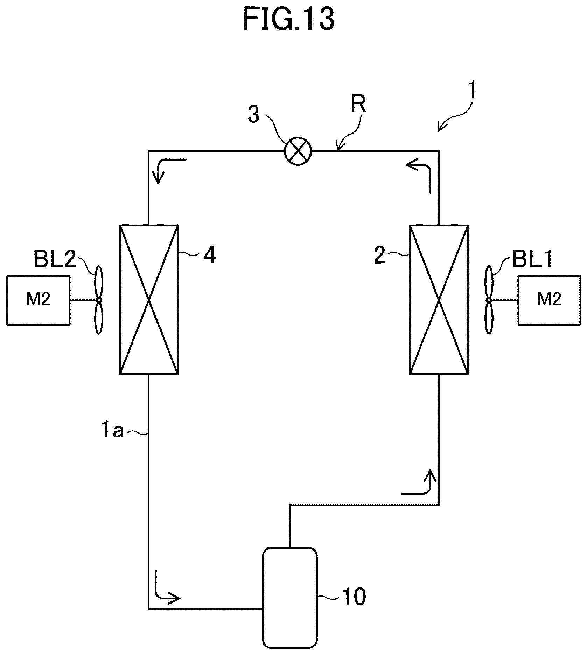

As shown in FIG. 13, an air conditioner (1) of a third embodiment has a refrigerant circuit (1a) filled with a refrigerant. The refrigerant circuit (1a) has the compressor (10) of the second embodiment above, a radiator (2), an expansion valve (3), and an evaporator (4). The refrigerant circuit (1a) performs a vapor compression refrigeration cycle. The air conditioner (1) may be an air conditioner that switches between cooling and heating. In this case, the air conditioner (1) further has a switching mechanism for switching the direction of refrigerant circulation (for example, a four-way switching valve). Alternatively, the air conditioner (1) of the third embodiment may be for cooling only or heating only.

In the refrigeration cycle, the refrigerant compressed by the compressor (10) dissipates heat to the air in the radiator (2). The refrigerant that has dissipated heat is decompressed by the expansion valve (3), and evaporates in the evaporator (4). The evaporated refrigerant is sucked into the compressor (10) (see the arrows in FIG. 13).

In the radiator (2), the refrigerant flowing through the radiator (2) and the air blown by a first blower (BL1) driven by a first motor (M1) exchange heat. In the evaporator (4), the refrigerant flowing through the evaporator (4) and the air blown by a second blower (BL2) driven by a second motor (M2) exchange heat.

The air conditioner (1) of the third embodiment includes the compressor (10) of the second embodiment that includes the motor (20) of the first embodiment. Thus, the air conditioner (1) can be downsized and the noise due to vibration can be reduced.

The air conditioner (1) shown in FIG. 13 is an example, and the configuration of the air conditioner (1) is not particularly limited. In addition, in the third embodiment, the motor (20) of the first embodiment is used as the motor for driving the compressor (10), but in addition to or instead of this, the motor (20) may be used as the motor (M1) for driving the first blower (BL1) and/or the motor (M2) for driving the second blower (BL2).

(Other Embodiments)

In each of the above embodiments (including their variations), the motor (20) has been described as the rotary electric machine for the air conditioner, but the same configuration as that of the motor (20) may be applied to a generator.

While the embodiments have been described above, it will be understood that various changes in form and details can be made without departing from the spirit and scope of the claims. The above embodiments and variations may be appropriately combined or replaced. In addition, the expressions of "first", "second", ... , in the specification and claims are used to distinguish the terms to which these expressions are given, and do not limit the number and order of the terms.

INDUSTRIAL APPLICABILITY

As described above, the present disclosure is useful for a rotary electric machine for an air conditioner, a compressor, and an air conditioner.

DESCRIPTION OF REFERENCE CHARACTERS

| | |
|---|---|
| 1 | Air Conditioner |
| 10 | Compressor |
| 20 | Motor (Rotary Electric Machine for Air Conditioner) |
| 21 | Stator |
| 22 | Core |
| 22a | Recessed Portion |
| 23 | Coil |
| 23a | Winding |
| 24 | Back Yoke |
| 25 | Tooth |
| 26 | First Insulating Portion |
| 27 | Swaging Portion |
| 28 | Second Insulating Portion |
| 31 | Rotor |
| 100 | Connecting Portion |
| 101 | First Elastic Body |
| 101a | Raised Portion |
| 102 | Second Elastic Body |
| O | Rotation Axis |

**Claims**

1. A rotary electric machine (20) for an air conditioner, comprising: a rotor (31) configured to rotate about a rotation axis (O); and a stator (21) disposed on an outer side of the rotor (31) in a radial direction, wherein

   the stator (21) has

   a core (22) including a tubular back yoke (24) and a plurality of teeth (25) protruding inward in the radial direction from the back yoke (24),
   a coil (23) that is a winding (23a) wound around each of the teeth (25),
   a first insulating portion (26) provided between the core (22) and the coil (23) and insulating the core (22) and the coil (23) from each other, and
   a connecting portion (100) connecting the first insulating portion (26) and the core (22), and

   the connecting portion (100) is formed so that the coil (23) and the first insulating portion (26) can vibrate in the radial direction relative to the core (22).

2. The rotary electric machine (20) for the air conditioner according to claim 1, wherein
   the connecting portion (100) has a first elastic body (101) connecting the first insulating portion (26) and the core (22).

3. The rotary electric machine (20) for the air conditioner according to claim 2, wherein

the first elastic body (101) has a raised portion (101a), and
the core (22) has a recessed portion (22a) into which the raised portion (101a) is inserted.

4. The rotary electric machine (20) for the air conditioner according to claim 2, wherein

the core (22) is comprised of laminated steel plates, and includes a swaging portion (27) fixing the steel plates to each other, and
the first elastic body (101) is connected to the swaging portion (27).

5. The rotary electric machine (20) for the air conditioner according to any one of claims 2 to 4, wherein a length of the first elastic body (101) in the radial direction is shorter than a length in a direction orthogonal to the radial direction.

6. The rotary electric machine (20) for the air conditioner according to any one of claims 2 to 5, wherein a material of the first elastic body (101) is the same as a material of the first insulating portion (26).

7. The rotary electric machine (20) for the air conditioner according to claim 6, wherein the first elastic body (101) is integrated with the first insulating portion (26).

8. The rotary electric machine (20) for the air conditioner according to any one of claims 2 to 5, wherein a material of the first elastic body (101) is different from a material of the first insulating portion (26).

9. The rotary electric machine (20) for the air conditioner according to any one of claims 1 to 8, wherein the first insulating portion (26) is disposed between the tooth (25) and the coil (23) in an axial direction and between the tooth (25) and the coil (23) in a circumferential direction.

10. The rotary electric machine (20) for the air conditioner according to any one of claims 1 to 9, wherein

the stator (21) includes a second insulating portion (28) disposed outside the back yoke (24) in the axial direction and fixed to the core (22), and
the connecting portion (100) has a second elastic body (102) connecting the first insulating portion (26) and the second insulating portion (28).

11. A compressor comprising:
the rotary electric machine (20) for the air conditioner according to any one of claims 1 to 10.

12. An air conditioner comprising:
the rotary electric machine (20) for the air conditioner according to any one of claims 1 to 10.

FIG.1

# FIG.2

# FIG.3

# FIG.4

# FIG.5A

23    26

101(100)

# FIG.5B

VIBRATION DIRECTION
(RADIAL DIRECTION)

26

101(100)

101a

FIG.6

# FIG.7

23
26
101(100)
101a
22a
22(25)

# FIG.8A

26

101(100)

101a

# FIG.8B

26

101(100)

101a

# FIG.8C

26

101(100)

101a

## FIG.8D

26

101(100)

101a

## FIG.8E

26

101(100)

101a

## FIG.8F

26

101(100)

101a

FIG.9A

101(100)

27

FIG.9B

101(100)

27

FIG.9C

26

101(100)

101b

22(25)

FIG.9D

22(25)

22a

FIG.9E

22a

22(25)

## FIG.10A

## FIG.10B

## FIG.10C

# FIG.10D

23 26 28

102(100)

101(100)

102(100)

28

23 26

# FIG.10E

26 28

101(100)

102(100)

# FIG.10F

26 28

101 102

100

## FIG.11A

## FIG.11B

# FIG.11C

26    101(100)

23

22(25)

101(100)

# FIG.11D

26

23

101(100)

22(25)

# FIG.12

# FIG.13

## INTERNATIONAL SEARCH REPORT

| International application No. |
| --- |
| **PCT/JP2025/026003** |

### A. CLASSIFICATION OF SUBJECT MATTER

*H02K 3/34*(2006.01)i
FI: H02K3/34 C

According to International Patent Classification (IPC) or to both national classification and IPC

### B. FIELDS SEARCHED

Minimum documentation searched (classification system followed by classification symbols)

H02K3/34

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2011-234552 A (HONDA MOTOR CO., LTD.) 17 November 2011 (2011-11-17) paragraphs [0020]-[0042], fig. 1-7 | 1-3, 6-7, 9 |
| Y | | 4-5, 10-12 |
| A | | 8 |
| X | JP 2008-35616 A (AISIN SEIKI KABUSHIKI KAISHA) 14 February 2008 (2008-02-14) paragraphs [0011]-[0023], fig. 1-4 | 1-2, 6-9 |
| Y | | 4-5, 11-12 |
| A | | 3,10 |
| Y | JP 2004-236441 A (HONDA MOTOR CO., LTD.) 19 August 2004 (2004-08-19) paragraph [0036], fig. 4-5 | 4-5, 10-12 |
| Y | JP 2019-41444 A (DAIKIN INDUSTRIES, LTD.) 14 March 2019 (2019-03-14) paragraphs [0025]-[0027], fig. 1-2 | 11-12 |

| ✓ Further documents are listed in the continuation of Box C. | ✓ See patent family annex. |
| --- | --- |

| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 September 2025** | **07 October 2025** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
| --- |
| **PCT/JP2025/026003** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 10-309053 A (SHINANO KENSHI KABUSHIKI KAISHA) 17 November 1998 (1998-11-17) | 1-12 |
| A | Microfilm of the specification and drawings annexed to the request of Japanese Utility Model Application No. 97630/1978 (Laid-open No. 15939/1980) (NIPPONDENSO CO., LTD.) 31 January 1980 (1980-01-31) | 1-12 |

Form PCT/ISA/210 (second sheet) (July 2022)

## INTERNATIONAL SEARCH REPORT
### Information on patent family members

International application No.

**PCT/JP2025/026003**

| Patent document cited in search report | | | Publication date (day/month/year) | Patent family member(s) | Publication date (day/month/year) |
|---|---|---|---|---|---|
| JP | 2011-234552 | A | 17 November 2011 | (Family: none) | |
| JP | 2008-35616 | A | 14 February 2008 | US 2008/0024019 A1 paragraphs [0026]-[0038], fig. 1-4B DE 102007000411 A1 CN 101114779 A | |
| JP | 2004-236441 | A | 19 August 2004 | (Family: none) | |
| JP | 2019-41444 | A | 14 March 2019 | WO 2019/039143 A1 paragraphs [0025]-[0027], fig. 1-2 CN 111033953 A | |
| JP | 10-309053 | A | 17 November 1998 | (Family: none) | |
| JP | 55-15939 | U1 | 31 January 1980 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016119743 A